# DEMANDE DE BREVET EUROPEEN

(11) **EP 0 565 393 A1**
(43) Date de publication de la demande: **13.10.1993**
(21) Numéro de dépôt: 93400632.1
(22) Date de dépôt: 12.03.1993
(51) Int. Cl.: B60P 1/44

(54) **Hayon élévateur**

(30) Priorité: 06.04.1992 FR 9204155
(71) Demandeur: ERHEL, F-21001 Dijon (FR)
(72) Inventeur: Saussard, Philippe, F-21490 Varois et Haignot (FR); Launay, Pierre, F-21240 Talant (FR)
(74) Mandataire: Loyer, Bertrand

(57) **Abrégé**

Hayon élévateur destiné à être monté sur un poids lourd du genre comportant une plate-forme (1) portée à son extrémité avant par une chape (21) d'un système de levage (2) articulé au poids lourd, ledit hayon pouvant passer d'une position de travail pour laquelle il est déplié à l'arrière du poids lourd à une position de route pour laquelle il est replié sous ledit poids lourd par rotation dudit système de levage (2) tandis que la plate-forme (1) est en appui contre ledit système de levage.

Suivant l'invention, la plate-forme (1) est amenée contre le système de levage (2) par un mouvement au cours duquel son extrémité avant (12) est désolidarisée de ladite chape et éloignée de celle-ci, et en ce qu'un moyen de blocage en fin de course assure son maintien en position de travail.

## Description

La présente invention concerne d'une manière générale les hayons élévateurs du type de ceux usuellement mis en oeuvre pour effectuer le chargement et le déchargement des poids lourds, et plus précisément les hayons fixés sous le châssis du véhicule et repliés sous celui-ci lorsqu'ils ne sont pas utilisés.

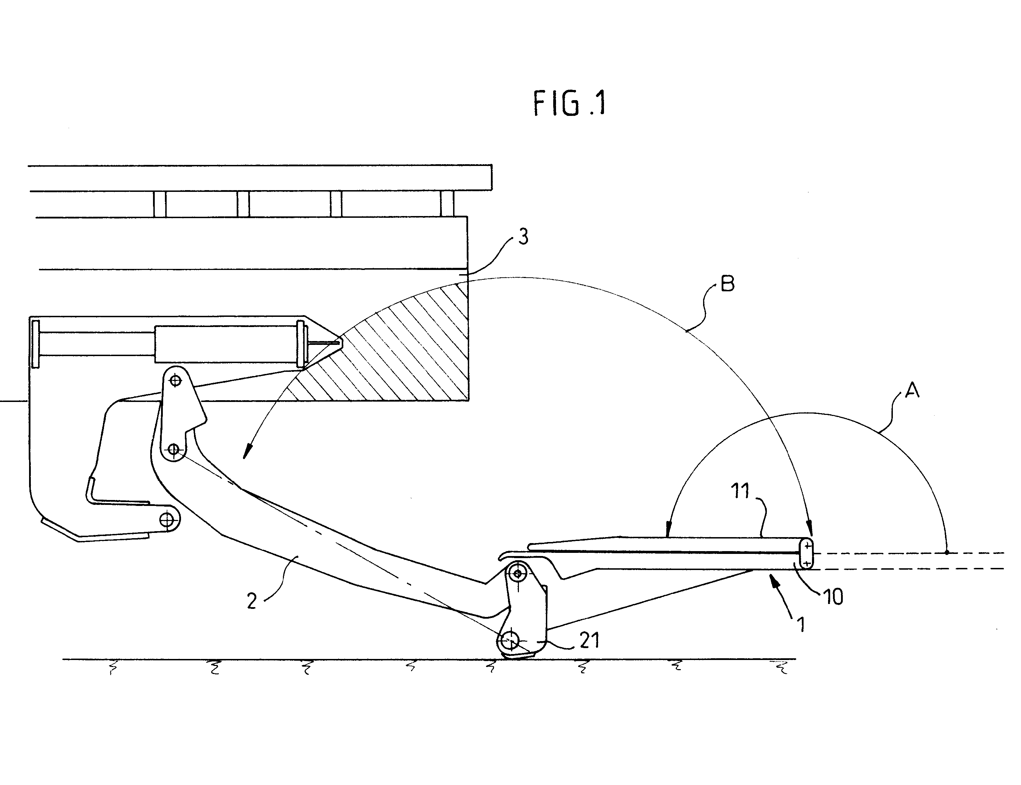

Comme représenté à la figure 1, les hayons élévateurs comportent usuellement une plate-forme 1, en deux parties 10, 11 mobiles en rotation l'une par rapport à l'autre, portée par un système de levage 2 articulé sous le châssis 3 du poids lourd.

Le repliement d'un tel hayon pour le ranger en position de stockage ou de route, c'est-à-dire en position de non utilisation sous le châssis du poids lourd, est fait suivant plusieurs mouvements successifs de rotation.

L'on replie tout d'abord l'une sur l'autre les deux parties 10, 11 de la plate-forme 1, suivant la flèche A, puis l'on ramène la plate-forme 1 ainsi pliée sur elle-même contre le système de levage 2 par une rotation suivant B autour de l'axe par lequel ladite plate-forme est portée par le système de levage. Enfin, ledit système de levage 2 est entraîné en rotation afin de rapprocher ladite plate-forme 1 du châssis 3, puis, dans certains montages, en translation afin d'escamoter totalement le hayon sous le châssis.

Comme on peut le remarquer sur la figure 1, la place disponible pour la rotation suivant B est assez réduite et il n'est pas possible d'utiliser une plate-forme 1 de grande dimension longitudinale, c'est-à-dire dans le sens de déplacement du poids lourd, sans entailler la zone représentée hachurée du châssis.

De ce fait, pour chaque montage d'un hayon sur un poids lourd il est nécessaire soit d'entailler son châssis, soit de prévoir un hayon avec une plate-forme moins importante.

Il a été proposé de pallier cet inconvénient en montant la plate-forme mobile longitudinalement par rapport au système de levage 2 en mettant en place une glissière traversant la chape 21 par laquelle la plate-forme est montée sur ledit système de levage.

Un tel montage permet d'éviter les inconvénients décrits ci-dessus mais pose un nouveau problème du fait que la plate-forme est, en service, montée en porte-à-faux par rapport au système de levage ce qui limite les charges pouvant être manipulées avec ce hayon.

La présente invention a alors pour but de proposer un hayon élévateur dont le repliage en position de route peut être fait dans l'espace situé sous le châssis du poids lourd sans nécessiter de l'entailler, qui puisse comporter une plate-forme de grande dimension longitudinale et soit capable de supporter de lourdes charges.

A cet effet, l'invention concerne un hayon élévateur destiné à être monté sur un poids lourd, du genre comportant une plate-forme portée par une chape d'un système de levage articulé au poids lourd, ledit hayon pouvant passer d'une position de travail pour laquelle il est déplié à l'arrière du poids lourd à une position de route pour laquelle il est replié sous ledit poids lourd par rotation dudit système de levage tandis que la plate-forme est en appui contre ledit système de levage, caractérisé en ce que la plate-forme est amenée contre le système de levage par un mouvement au cours duquel son extrémité avant est désolidarisée de ladite chape et éloignée de celle-ci, et en ce qu'un moyen de blocage en fin de course assure son maintien en position de travail.

Dans une première forme de réalisation, le hayon selon l'invention est encore remarquable en ce que :
- au cours du mouvement l'amenant contre le système de levage, la plate-forme se déplace sensiblement parallèlement à elle-même,
- la plate-forme est montée mobile par rapport à la chape par deux bras disposés parallèlement entre ladite chape et la plate-forme,
- lesdits bras sont fixés à la plate-forme par l'intermédiaire d'un support solidaire de celle-ci,
- le moyen de blocage est conformé à son extrémité proche du système de levage en un crochet pouvant collaborer avec un axe de la chape en position de travail du hayon.

Dans une seconde forme de réalisation, le hayon selon l'invention est encore remarquable en ce que :
- au cours du mouvement l'amenant contre le système de levage, l'extrémité avant de la plate-forme se déplace le long dudit système de levage,
- l'extrémité avant de la plate-forme se déplace le long d'un moyen de guidage fixé sur le système de levage,
- l'extrémité avant de la plate-forme comporte un galet,
- le système de levage porte un rail,
- un bras relie la plate-forme à la chape.

La présente invention sera mieux comprise par la description qui va suivre en référence au dessin joint sur lequel :
- la figure 1 représente un hayon de l'art antérieur,
- la figure 2 représente un hayon suivant une première forme de réalisation de l'invention en position de travail,
- les figures 3 à 6 représentent les différentes phases du repliement du hayon de la figure 2 pour l'amener dans sa position de route,
- la figure 7 représente un hayon suivant une deuxième forme de réalisation de l'invention en position de travail,
- la figure 8 montre le hayon suivant la figure 7 avec la plate-forme disposée contre le système de levage.

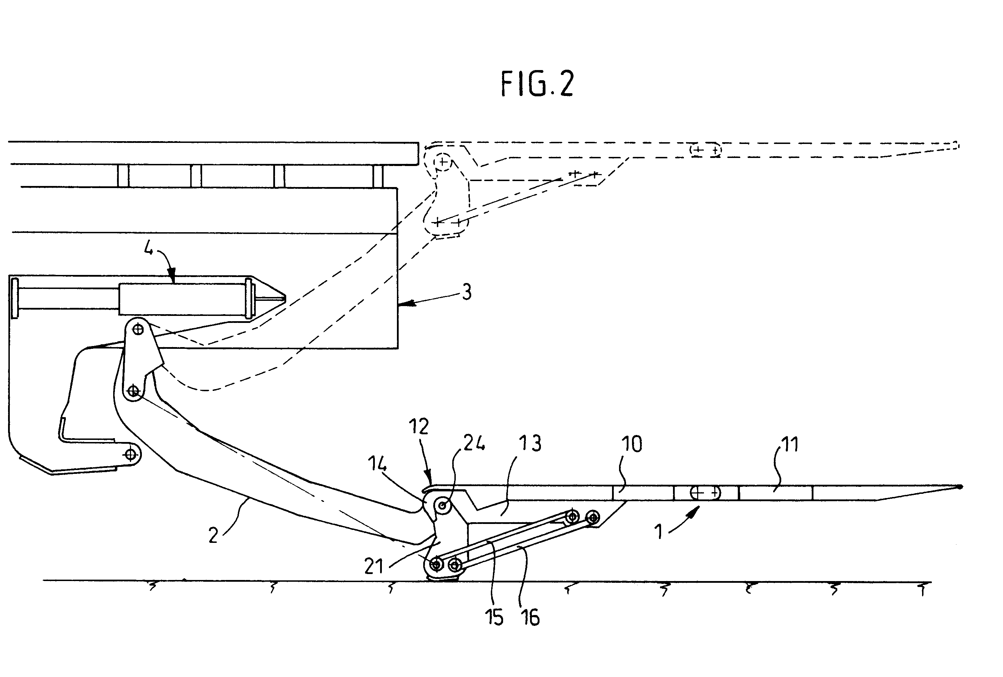

Comme représenté sur la figure 2, le hayon suivant la première forme de réalisation de l'invention comporte de manière connue en soi, une plate-forme 1 en deux parties 10, 11 mobiles en rotation l'une par rapport à l'autre, portée par un système de levage 2 par l'intermédiaire d'une chape 21.

De manière connue en soi, la plate-forme est maintenue de chaque côté par des éléments disposés symétriquement afin d'assurer une meilleure résistance aux charges. Nous décrirons ci-après les éléments présents sur un côté de la plate-forme, étant bien entendu que les mêmes éléments sont usuellement disposés de manière symétrique sur l'autre côté.

Le système de levage 2 est fixé sous le châssis 3 du poids lourd par l'intermédiaire d'un dispositif de rétraction 4 de type classique.

Suivant la première forme de réalisation de l'invention, la plate-forme 1 est montée mobile par rapport à la chape 21 grâce à deux bras 15, 16 disposés parallèlement entre ladite chape 21 et la partie 10 de la plate-forme. Ces deux bras 15,16 sont disposés de manière à définir un parallélogramme dont les deux autres côtés sont formés respectivement par la portion de chape et la portion de plate-forme comprises entre leurs points d'attache. Dans l'exemple de réalisation représenté aux figures 2 à 6 ces deux autres côtés sont horizontaux.

Dans l'exemple représenté sur les figures, lesdits bras 15, 16 sont indirectement fixés à la plate-forme par l'intermédiaire d'un support 13 solidaire de celle-ci.

Afin d'assurer le maintien de la plate-forme en position de travail, un moyen de blocage est prévu en fin de course.

Dans l'exemple représenté, ledit moyen de blocage est réalisé en conformant l'extrémité proche du système de levage 2 dudit support 13 en un crochet 14 collaborant avec un axe 24 de la chape 21 en position de travail du hayon.

Par l'appui dudit crochet 14 sur l'axe 24, l'on assure la commande en déplacement de la plate-forme en hauteur pour son utilisation ainsi que la résistance mécanique permettant la manipulation de lourdes charges.

Sur la figure 2, le hayon suivant l'invention est représenté en position de travail, un vérin non représenté le faisant passer de la position basse, représentée en trait plein, pour laquelle la chape 21 repose sur le sol, à la position haute, représentée en pointillés, pour laquelle la plate-forme est au niveau du plancher du poids lourd.

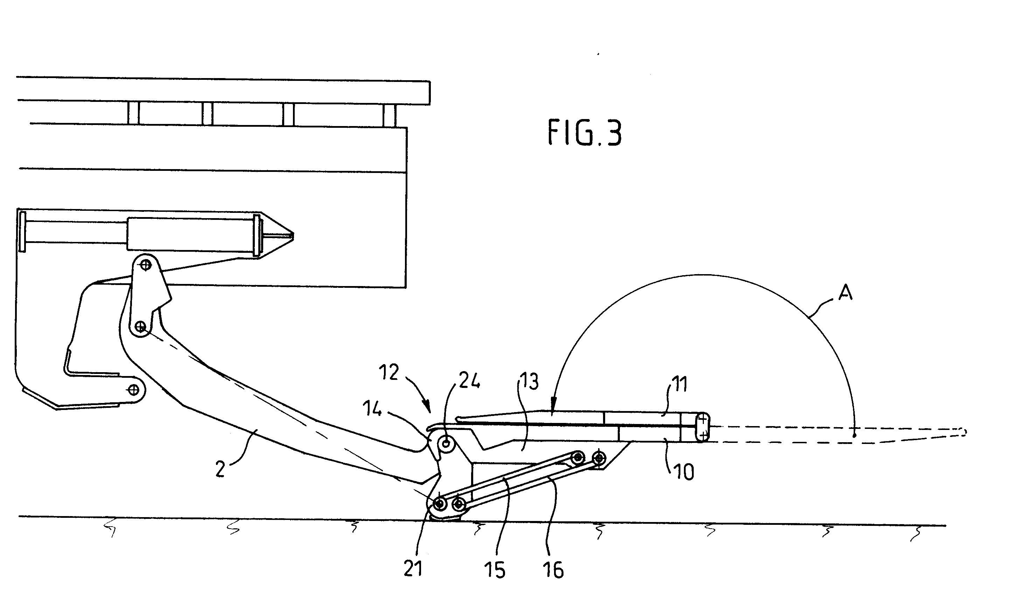

Pour le pliage du hayon en position route, l'on replie tout d'abord comme à l'habitude la partie 11 de la plate-forme 1 sur la partie 10 par une rotation suivant A pour amener le hayon dans la configuration représentée à la figure 3.

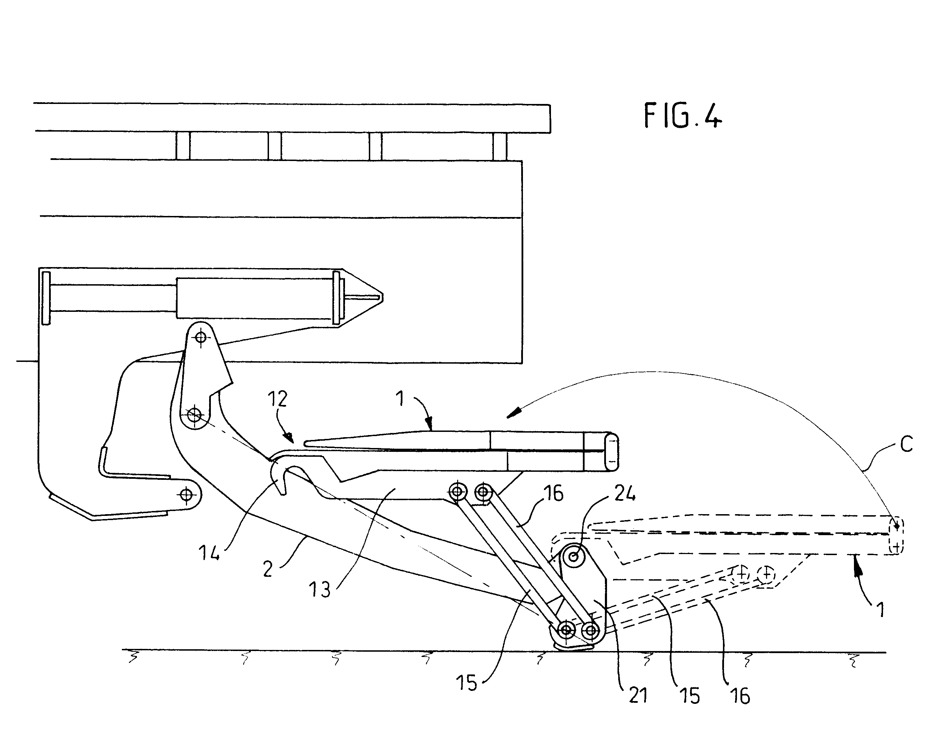

Suivant l'invention, la phase suivante de pliage du hayon au cours de laquelle la plate-forme 1 est amenée contre le système de levage 2 se fait comme représenté à la figure 4 par un mouvement suivant C au cours duquel la plate-forme se déplace parallèlement à elle-même, en ne subissant pas de retournement. Ce mouvement se fait par la déformation du parallélogramme formé par les bras 15 et 16, tandis que son côté formé par la portion de chape disposée entre lesdits bras reste immobile. Ce mouvement est rendu possible par la disposition de l'invention selon laquelle l'extrémité avant 12 de la plate-forme 1 peut être désolidarisée de la chape 21.

Ainsi, suivant l'invention, la plate-forme 1 est amenée contre le système de levage 2 par un mouvement au cours duquel l'extrémité avant 12 de ladite plate-forme est éloignée de la chape 21.

Dans l'exemple représenté, la plate-forme est ramenée contre le système de levage 2 tout en demeurant parallèle au sol.

En variante, les bras 15 et 16 peuvent ne pas être strictement parallèles ou être de longueurs un peu différentes, la plate-forme se déplace alors suivant un mouvement semblable à celui précédemment décrit au cours duquel elle reste sensiblement parallèle à elle-même.

Comme on peut le voir sur la figure 4, ce mouvement peut être effectué en utilisant un faible espace vertical quelle que soit la longueur de la plate-forme.

Il est alors possible de replier un hayon possédant une plate-forme de grande dimension longitudinale sans devoir entailler le châssis du poids lourd.

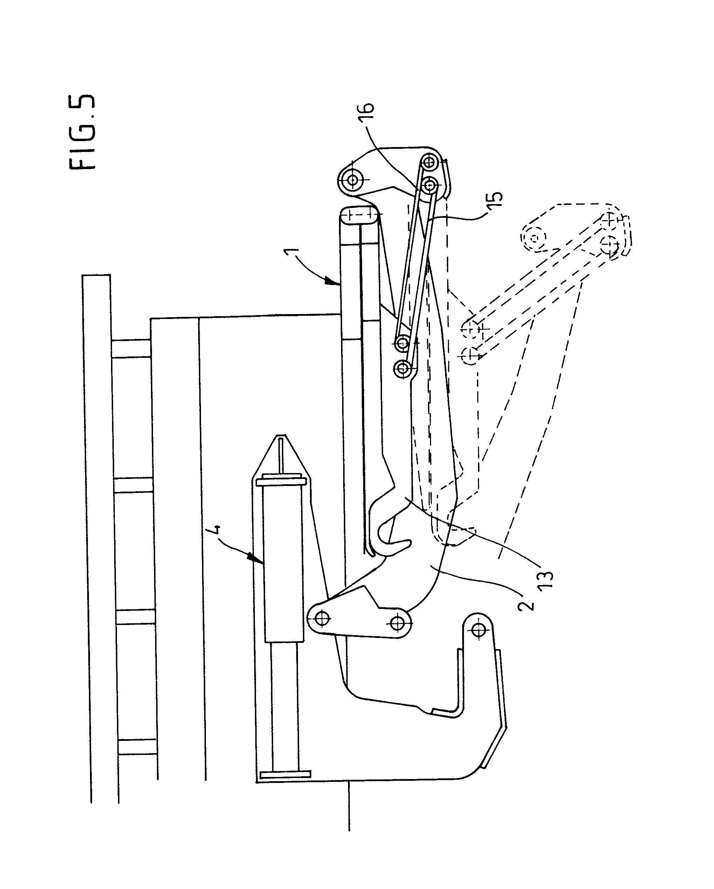

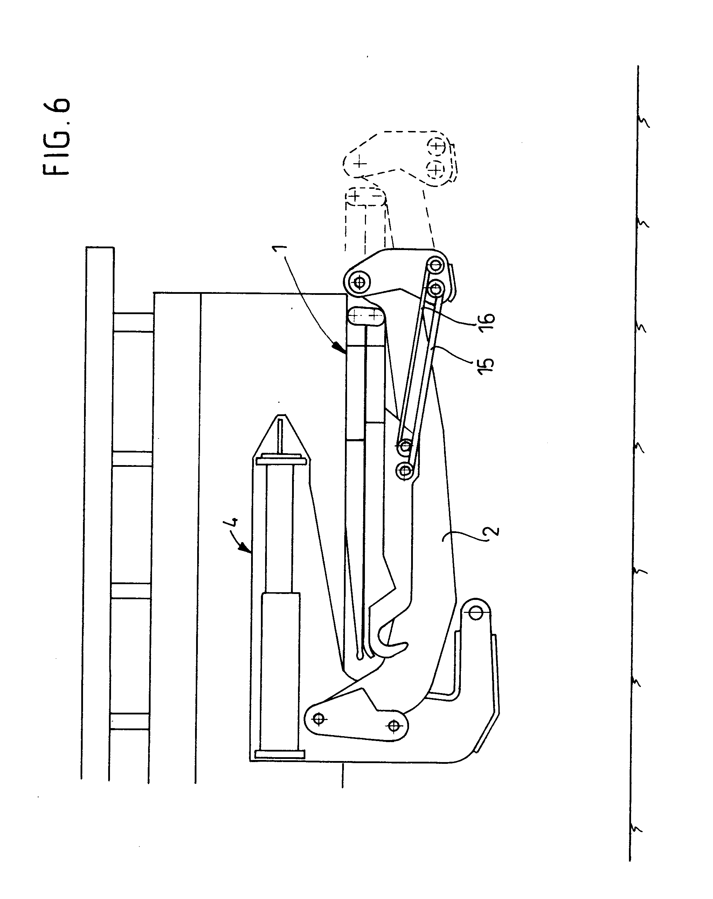

Comme représenté aux figures 5 et 6, le retour du hayon vers sa position de route se poursuit de la manière usuelle en remontant le système de levage 2 sous le châssis tandis que la plate-forme poursuit sous l'effet de son poids son mouvement l'amenant contre ledit système de levage, puis en faisant coulisser l'ensemble sous le poids lourd grâce au dispositif de rétraction 4 afin que la plate-forme ne dépasse pas à l'arrière du poids lourd.

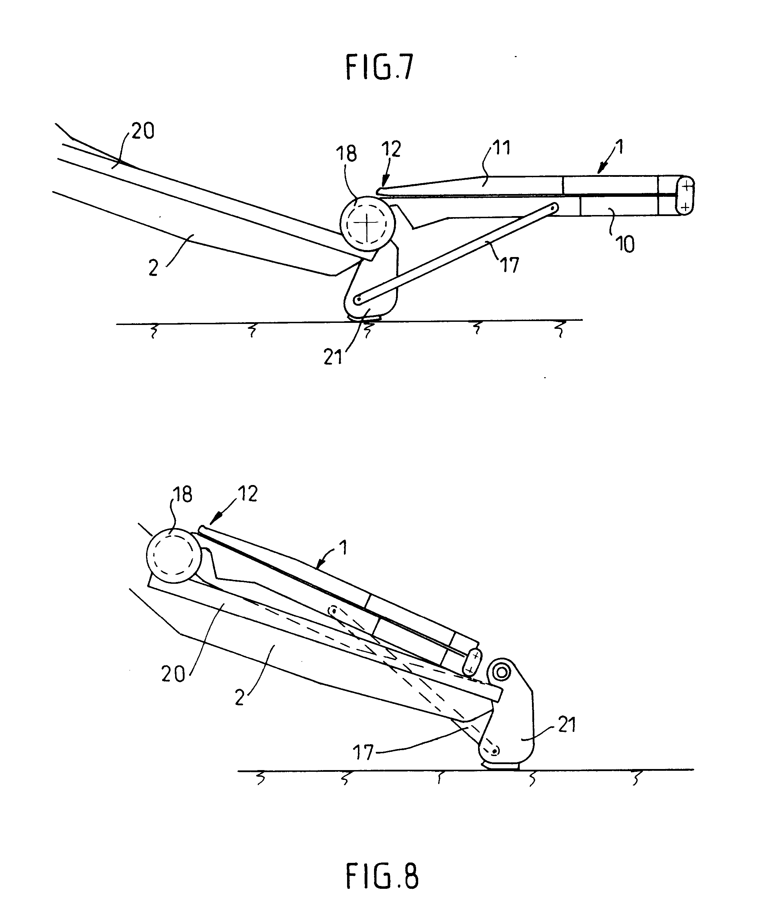

Le hayon suivant la seconde forme de réalisation de l'invention représenté aux figures 7 et 8 diffère de celui qui vient d'être décrit par le fait que son extrémité avant 12 est éloignée de la chape 21 par un déplacement le long d'un moyen de guidage 20 fixé sur le système de levage 2.

Dans l'exemple représenté, l'extrémité avant 12 de la plate-forme comporte un galet 18 destiné à rouler sur un rail 20.

Un seul bras 17 relie la partie 10 de la plate-forme 1 à la chape 21.

Lors du passage de la position de service à la position de repos, la plate-forme est poussée vers le châssis du poids lourd, le galet 18 roule sur le rail 20 tandis que le bras 17 décrit un arc de cercle.

L'on ne sortirai pas du cadre de la présente invention en utilisant des dispositifs différents permettant la déplacement de l'extrémité avant 12 le long du système de levage 2, des patins pourraient par exemple être mis en oeuvre de manière à faire glisser ladite extrémité avant.

## Revendications

1. - Hayon élévateur destiné à être monté sur un poids lourd du genre comportant une plate-forme (1) portée à son extrémité avant par une chape (21) d'un système de levage (2) articulé au poids lourd, ledit hayon pouvant passer d'une position de travail pour laquelle il est déplié à l'arrière du poids lourd à une position de route pour laquelle il est replié sous ledit poids lourd par rotation dudit système de levage (2) tandis que la plate-forme (1) est en appui contre ledit système de levage, caractérisé en ce que la plate-forme (1) est amenée contre le système de levage (2) par un mouvement au cours duquel son extrémité avant (12) est désolidarisée de ladite chape et éloignée de celle-ci, et en ce qu'un moyen de blocage en fin de course assure son maintien en position de travail.

2. - Hayon selon la revendication 1, caractérisé en ce que au cours du mouvement l'amenant contre le système de levage (2), la plate-forme (1) se déplace sensiblement parallèlement à elle-même.

3. - Hayon selon la revendication 1, caractérisé en ce que au cours du mouvement l'amenant contre le système de levage (2), l'extrémité avant de la plate-forme (1) se déplace le long dudit système de levage (2).

4. - Hayon selon la revendication 2, caractérisé en ce que la plate-forme (1) est montée mobile par rapport à la chape (21) par deux bras (15, 16) disposés parallèlement entre ladite chape (21) et la plate-forme.

5. - Hayon selon la revendication 4, caractérisé en ce que lesdits bras (15, 16) sont fixés à la plate-forme (1) par l'intermédiaire d'un support (13) solidaire de celle-ci.

6. - Hayon selon la revendication 5, caractérisé en ce que le moyen de blocage est conformé à son extrémité proche du système de levage (2) en un crochet (14) pouvant collaborer avec un axe (24) de la chape (21) en position de travail du hayon.

7. - Hayon selon la revendication 3, caractérisé en ce que l'extrémité avant (12) de la plate-forme se déplace le long d'un moyen de guidage (20) fixé sur le système de levage (2).

8 - Hayon suivant l'une des revendications 3 ou 7, caractérisé en ce que l'extrémité avant (12) de la plate-forme comporte un galet (18).

9. - Hayon suivant l'une quelconque de revendications 3, 7 ou 8, caractérisé en ce que le système de levage (2) porte un rail (20).

10. - Hayon suivant l'une quelconque des revendications 3, 7 à 9, caractérisé en ce que un bras (17) relie la plate-forme (1) à la chape (21).
